# EUROPEAN PATENT SPECIFICATION

(11) **EP 2 489 774 B1**
(45) Date of publication and mention of the grant of the patent: **17.06.2015**
(21) Application number: 11155034.9
(22) Date of filing: 18.02.2011
(51) Int. Cl.: D06F 58/28, F25B 5/02, F25B 6/02, F25B 30/02, F25B 40/00, F25B 41/04

(54) **A heat pump laundry dryer**
Wärmepumpenwäschetrockner
Sèche-linge à pompe à chaleur

(43) Date of publication of application: 22.08.2012
(73) Proprietor: Electrolux Home Products Corporation N.V., 1130 Brussels (BE)
(72) Inventor: Bison, Alberto, 33080 Porcia (PN) (IT); Cavaretta, Francesco, 33080 Porcia (PN) (IT)
(74) Representative: Nardoni, Andrea

(56) References cited:
- EP-A2- 1 493 860
- US-A1- 2005 198 852

## Description

The present invention relates to a heat pump laundry dryer such as a cabinet dryer, a tumble dryer or a washer-dryer according to the preamble of claim 1.

In a laundry dryer, the heat pump technology is the most efficient way to save energy during drying laundry. The operation of the tumble dryer with the heat pump system includes two phases, namely a warm-up phase and a steady state phase. The warm-up phase is the initial phase after compressor has been switched on, wherein a certain time is need to reach full working condition in terms of temperatures and pressures. When the heat pump system starts, the temperatures of the air and the refrigerant are at ambient temperature. During the transitory phase, the temperatures of the air and the refrigerant increase up to a desired level. During the steady state phase, the temperatures of the air and the refrigerant are kept quite constant.

A problem is the quite long warm up time of the heat pump system. When the heat pump system starts all components are at ambient temperature. While in a traditional electrically heated tumble dryer the heating power is immediately supplied to the system, in heat pump system the power must be recovered by the dehumidification of the air itself after it has passed through the clothes to be dried. At the beginning the dehumidifying power is very low.

A further problem is the intrinsic unbalance between the refrigerant cycle and the air cycle when the desired steady state phase has been reached. In the steady state phase the air streaming in a closed loop should exchange the same power to be heated and dehumidified. The air is heated by the condenser and is dehumidified by the evaporator. However, the heating power at the condenser is necessarily higher than cooling power at the evaporator, since P_{condenser} = P_{cooling} + P_{compressor}. The heat pump is unbalanced, because the same air stream is cooled in the evaporator and heated in the condenser, where more heating capacity is available on the refrigerant side. This results in a continuous increasing of the temperature and the pressure of the refrigerant.

Conventionally an internal heat exchanger is used to cool down the refrigerant between the condenser and the throttle means. The condenser is a heat exchanger at the high pressure side of the refrigerant circuit. The internal heat exchanger is used at the same time to heat up the refrigerant at the outlet of the evaporator. The evaporator is a heat exchanger at the low pressure side of the refrigerant circuit. The low pressure side of the refrigerant circuit extends from the outlet of the throttle means, e.g. a capillary tube or an adjustable valve, to the inlet of the compressor. The high pressure side of the refrigerant circuit extends from the outlet of the compressor to the inlet of the expansion means.

The internal heat exchanger allows the refrigerant to enter the evaporator in more favourable conditions. The vapour quality is lower and the main part of the refrigerant is in the liquid phase, wherein the cooling capacity of the evaporator is increased. Otherwise the temperature of the refrigerant at the outlet of the low pressure side of the internal heat exchanger, which enters the inlet of the compressor, is higher, and the power required to the compressor increases as well. If cooling capacity increases more than the power required by the compressor, then the internal heat exchanger improves heat pump efficiency.

The internal heat exchanger in a heat pump system of a laundry dryer allows a shorter warm-up phase on the one hand and an improved heat pump performance during the steady state phase on the other hand. The internal heat exchanger can additionally improve the heat pump performance more than usual, if said internal heat exchanger is used to flood the evaporator, so that a part of the refrigerant flowing through the evaporator is maintained in the liquid phase. This occurs, if all the superheating phase in the evaporator is provided at the low pressure side of the internal heat exchanger.

Condensed refrigerant is cooled down as usual in the high pressure side of the internal heat exchanger, while in the low pressure side of the internal heat exchanger the vaporization of the refrigerant is completed and the superheating is performed. Therefore the evaporator improves its cooling performance, because the flooding allows a big heat exchange coefficient of the refrigerant in the liquid phase and the internal heat exchanger can improve the refrigerant sub-cooling at the high pressure side, since at the low pressure side of the internal heat exchanger the refrigerant can exchange both latent and sensible heat, so that more energy is available.

A laundry dryer with a heat pump system according to the preamble of claim 1 is disclosed in US 2005/0198852 A1.

Unfortunately the optimization of the internal heat exchanger is very different between the warm-up phase and the steady state phase.

It is an object of the present invention to provide a heat pump laundry dryer, which overcomes the above mentioned problems.

The object of the present invention is achieved by the heat pump system according to claim 1.

According to the present invention the refrigerant circuit includes at least one by-pass line for bypassing at least a part of the low pressure side and/or high pressure side of the internal heat exchanger.

According to the present invention the by-pass line can be at least partially closable by at least one regulation device.

The present invention is directed to a switchable by-pass line for deactivating the internal heat exchanger. For example, the internal heat exchanger may be deactivated during a warm-up phase and activated during a steady state phase. Alternatively, the internal heat exchanger may be activated during the warm-up phase and deactivated during the steady state phase. A partial deactivation of the internal heat exchanger is also possible.

For example, at least one regulation device is an on-off valve. In this case, the low pressure side or high pressure side of the internal heat exchanger is closable by at least one further on-off valve.

According to another embodiment of the present invention at least one regulation device is a three-way valve. The three-way valve may alternately open and close the by-pass line and the low pressure side or high pressure side of the internal heat exchanger.

At least one regulation device may be controlled by an electronic controller. Alternatively or additionally, at least one regulation device includes a shape memory material, wherein the geometric structure of shape memory material depends on the temperature of the refrigerant. Further, at least one regulation device may be a mechanical valve driven by the pressure of the refrigerant.

Preferably, only one of the low pressure side or high pressure side of the internal heat exchanger is bypassed by at least one by-pass line.

According to a further embodiment the internal heat exchanger has a variable length adjustable by a set of bypass lines and valves corresponding with said bypass lines.

Preferably, inlets of said by-pass lines are connected to different points of the low pressure side or the high pressure side of the internal heat exchanger, outlets of said by-pass lines are connected to the inlet of the compressor or to the inlet of the throttle means.

According to a further embodiment the heat pump system includes at least two internal heat exchangers, wherein each low pressure side and each high pressure side of said internal heat exchangers are separately connectable to the refrigerant circuit. Preferably, the at least two internal heat exchangers have different sizes.

Preferably, the low pressure side of at least one internal heat exchanger is connected or connectable to the refrigerant circuit, and the low pressure side of at least one other internal heat exchanger is disconnected or disconnectable from the refrigerant circuit.

In a similar way, the high pressure side of at least one internal heat exchanger is connected or connectable to the refrigerant circuit, and the high pressure side of at least one other internal heat exchanger is disconnected or dis connectable from the refrigerant circuit.

Preferably, one or more sensors are provided for detecting the current value of at least one physical quantity associated to the refrigerant circuit and/or the air stream circuit and wherein a control unit is adapted to control the at least one regulation device in response to the time progression of said at least one physical quantity, the control unit enables the refrigerant to flow through the at least one by-pass line, or to prevent the refrigerant from flowing through said by-pass line, or to adjust the flow of the refrigerant through said by-pass line.

Preferably, the at least one physical quantity is one of the following:
- temperature and/or pressure of the refrigerant at the outlet of the condenser (16),
- temperature and/or pressure of the refrigerant at the inlet and/or outlet of the compressor (14),
- temperature of the air stream at the outlet of the laundry chamber (52).

For example, the internal heat exchanger is dimensioned for a steady state phase of an operation cycle of the laundry dryer. In this case, the low pressure side or high pressure side of the internal heat exchanger is partially or completely bypassed during the warm-up phase.

Alternatively, the internal heat exchanger is dimensioned for a warm-up phase of the operation cycle of the laundry dryer. In this case, the low pressure side or high pressure side of the internal heat exchanger is partially or completely bypassed during the steady state phase.

The novel and inventive features believed to be the characteristic of the present invention are set forth in the appended claims.

The invention will be described in further detail with reference to the drawings, in which
- FIG 1: shows a schematic diagram of a heat pump system for a laundry dryer according to a first embodiment of the present invention,

- FIG 2: shows a schematic diagram of the heat pump system for the laundry dryer according to a second embodiment of the present invention,
- FIG 3: shows a schematic diagram of the heat pump system for the laundry dryer according to a third embodiment of the present invention,
- FIG 4: shows a schematic diagram of the heat pump system for the tumble dryer or washer-dryer according to a fourth embodiment of the present invention,
- FIG 5: shows a schematic diagram of the heat pump system for the laundry dryer according to a fifth embodiment of the present invention,
- FIG 6: shows a schematic diagram of the heat pump system for the laundry dryer according to a sixth embodiment of the present invention,
- FIG 7: shows a schematic diagram of an internal heat exchanger for the heat pump system according to the fifth embodiment of the present invention in a first state,
- FIG 8: shows a schematic diagram of the internal heat exchanger for the heat pump system according to the fifth embodiment of the present invention in a second state,

- FIG 9: shows a schematic diagram of the heat pump system for the laundry dryer according to a seventh embodiment of the present invention,
- FIG 10: shows a schematic diagram of the heat pump system for the laundry dryer according to an eighth embodiment of the present invention,
- FIG 11: shows a schematic diagram of the heat pump system according to the eighth embodiment of the present invention in a first operation mode,
- FIG 12: shows a schematic diagram of the heat pump system according to the eighth embodiment of the present invention in a second operation mode,
- FIG 13: shows a schematic diagram of the heat pump system according to the eighth embodiment of the present invention in a third operation mode, and
- FIG 14: shows a schematic diagram of the heat pump system according to the eighth embodiment of the present invention in a fourth operation mode.

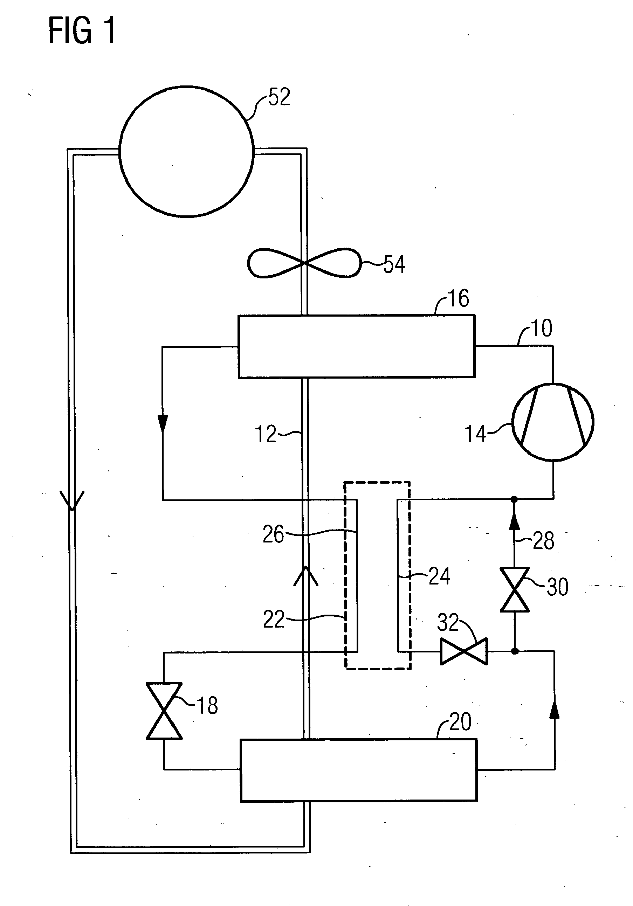

FIG 1 illustrates a schematic diagram of a heat pump system for a laundry dryer according to a first embodiment of the present invention. The heat pump laundry dryer includes a closed refrigerant circuit 10 and, preferably, a closed drying air circuit 12.

The refrigerant circuit 10 includes a compressor 14, a condenser 16, throttle means 18, an evaporator 20, an internal heat exchanger 22, a by-pass line 28 and two on-off valves 30 and 32. The refrigerant circuit 10 is subdivided into a low pressure portion and a high pressure portion. The low pressure portion and the high pressure portion are thermally connected by the internal heat exchanger 22.

The compressor 14, the condenser 16, a high pressure side 26 of the internal heat exchanger 22, the throttle means 18, the evaporator 20 and a low pressure side 24 of the internal heat exchanger 22 are switched in series and form a closed main loop of the refrigerant circuit 10. The by-pass line 28 is arranged parallel to the low pressure side 24 of the internal heat exchanger 22. A first on-off valve 30 is provided for opening and closing the by-pass line 28. A second on-off valve 32 is arranged at the inlet of the low pressure side 24 of the internal heat exchanger 22 and provided for opening and closing said low pressure side 24 of the internal heat exchanger 22.

The high pressure portion extends from the outlet of the compressor 14 via the condenser 16 and the high pressure side 26 of the internal heat exchanger 22 to the inlet of the throttle means 18. The low pressure portion extends from the outlet of the throttle means 18 via the evaporator 20 and the low pressure side 24 of the internal heat exchanger 22 or the by-pass line 28, respectively, to the inlet of the compressor 14.

The condenser 16 and the evaporator 20 are heat exchangers and form the thermal interconnections between the refrigerant circuit 10 and the drying air circuit 12. The drying air circuit 12 includes the evaporator 20, the condenser 16, a laundry chamber 52, preferably a rotatable drum, adapted to contain the laundry to be dried and a fan 54. In the air stream circuit 12 the evaporator 20 cools down and dehumidifies the air stream, after the air stream has passed the laundry chamber 52. Then the condenser 16 heats up the air stream, before the air stream is re-inserted into the laundry chamber 52. The air stream is driven by the fan 54.

The condenser 16 and the evaporator 20 do not always condense and evaporate, respectively, the refrigerant. For example, if CO₂ is used as refrigerant and said refrigerant operates at the supercritical mode, i.e. at least at the critical pressure and always in gas phase, then the refrigerant is neither condensed nor evaporated. In this case, the condenser 16 and the evaporator 20 operate factually as a gas cooler and a gas heater, respectively.

In the refrigerant circuit 12 a refrigerant is compressed by the compressor 14, condensed in the condenser 16, cooled down in the high pressure side 26 of the internal heat exchanger 22, laminated in the expansion means 18, vaporised in the evaporator 20 and in the low pressure side 24 of the internal heat exchanger 22, if the first on-off valve 30 is closed and the second on-off valve 32 is open. However, if the first on-off valve 30 is open and the second on-off valve 32 is closed, then the refrigerant is vaporised only in the evaporator 20 and flows through the by-pass line 28. In this case the condensed fluid coming from the condenser 16 flows through the high pressure side 26 of the internal heat exchanger 22 without being cooled down.

The operation cycle is subdivided into a warm-up phase and a steady state phase. The warm-up phase and the steady state phase require different dimensions of the refrigerant circuit 10, in particular of the internal heat exchanger 22, for an optimized performance.

If the internal heat exchanger 22 is dimensioned for the steady state phase, then the first on-off valve 30 is open and the second on-off valve 32 is closed during the warm-up phase, so that the refrigerant by-passes the low pressure side 24 of the internal heat exchanger 22. Then, the first on-off valve 30 is closed and the second on-off valve 32 is open during the steady state phase.

In contrast, if the internal heat exchanger 22 is dimensioned for the warm-up phase, then the first on-off valve 30 is closed and the second on-off valve 32 is open during the warm-up phase, so that the refrigerant flows through the low pressure side 24 of the internal heat exchanger 22. Then, the first on-off valve 30 is open and the second on-off valve 32 is closed during the steady state phase.

If the internal heat exchanger 22 is dimensioned for the steady state phase, the present invention enables the heat pump system to operate at its most efficient level during the steady state phase without penalizing the heat pump system efficiency during the warm-up phase, i.e. without lengthening the warm-up phase.

Conversely if the internal heat exchanger 22 is dimensioned for the warm-up phase, the present invention enables the heat pump system to shorten the warm-up phase without penalizing the heat pump system efficiency during the steady state phase.

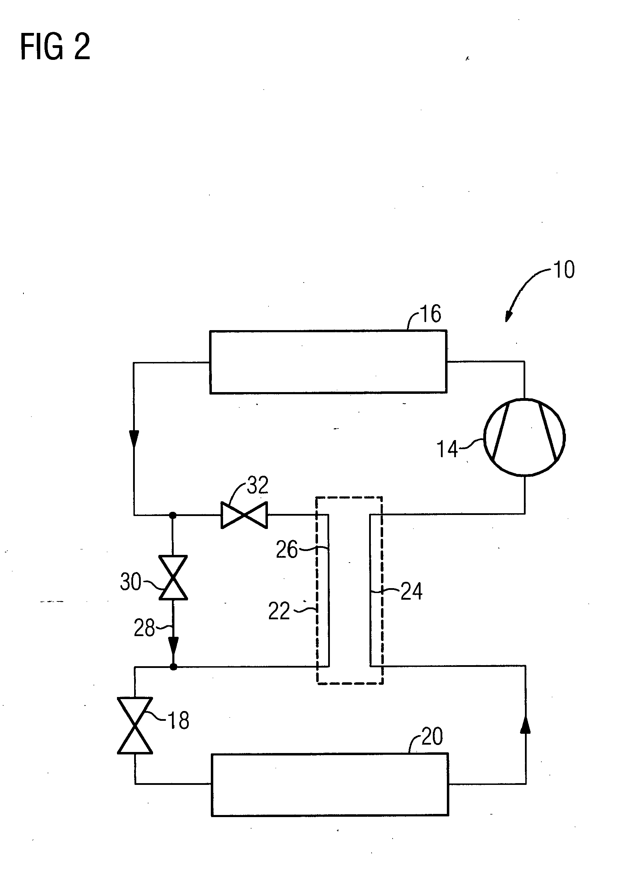

FIG 2 illustrates a schematic diagram of the heat pump laundry dryer according to a second embodiment of the present invention. The heat pump system of the second embodiment includes the same components as the heat pump system of the first embodiment in FIG 1. However, the drying air circuit 12 with the laundry chamber 52 and the fan 54 is not explicitly shown in FIG 2.

Further, the arrangement of the components in the heat pump system of the second embodiment is similar to the heat pump system of the first embodiment. However, the by-pass line 28 is arranged parallel to the high pressure side 26 of the internal heat exchanger 22, instead of the low pressure side 24 of the internal heat exchanger 22.

The first on-off valve 30 is also provided for opening and closing the by-pass line 28. The second on-off valve 32 is arranged at the inlet of the high pressure side 26 of the internal heat exchanger 22 and provided for opening and closing said high pressure side 26 of the internal heat exchanger 22.

If the internal heat exchanger 22 is dimensioned for the steady state phase, then the first on-off valve 30 is open and the second on-off valve 32 is closed during the warm-up phase, so that the refrigerant by-passes the high pressure side 26 of the internal heat exchanger 22. During the steady state phase the first on-off valve 30 is closed and the second on-off valve 32 is open.

In contrast, if the internal heat exchanger 22 is dimensioned for the warm-up phase, then the first on-off valve 30 is closed and the second on-off valve 32 is open during the warm-up phase, so that the refrigerant flows through the high pressure side 26 of the internal heat exchanger 22. During the steady state phase the first on-off valve 30 is open and the second on-off valve 32 is closed.

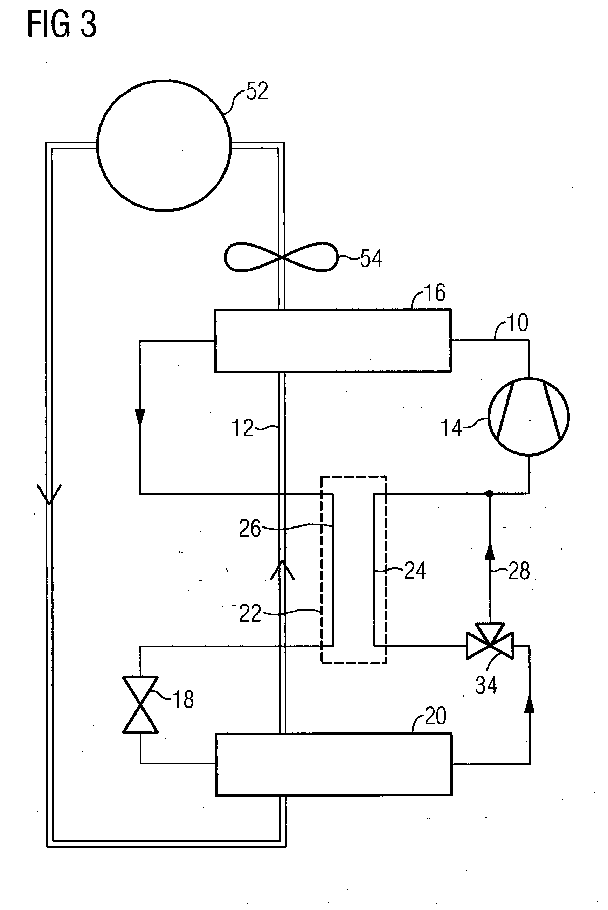

FIG 3 illustrates a schematic diagram of the heat pump laundry dryer according to a third embodiment of the present invention. The heat pump system of the third embodiment has substantially the same structure as the heat pump system of the first embodiment in FIG 1. Instead of the first on-off valve 30 and the second on-off valve 32, the heat pump system of the third embodiment comprises a three-way valve 34.

The three-way valve 34 is connected to the outlet of the evaporator 20, the inlet of the by-pass line 28 and the inlet of the low pressure side 24 of the internal heat exchanger 22. The by-pass line 28 can include a one-way valve, which is not shown in FIG 3, in order to avoid that the refrigerant flows into the wrong direction.

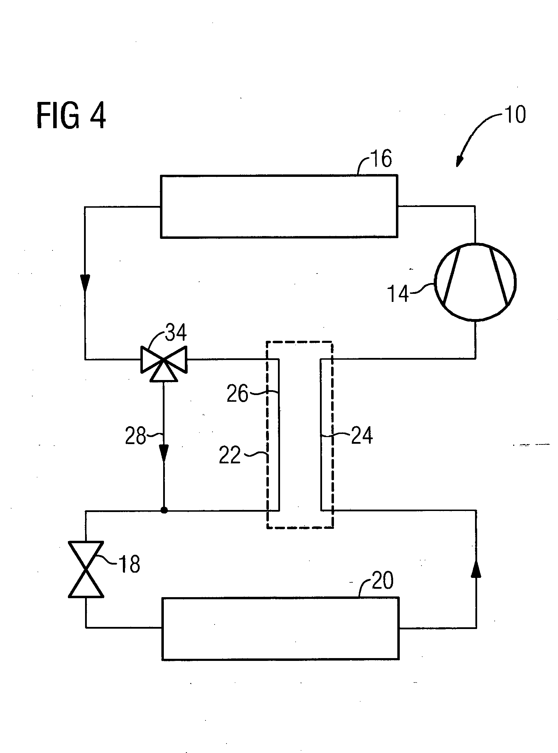

FIG 4 illustrates a schematic diagram of the heat pump laundry dryer according to a fourth embodiment of the present invention. The heat pump system of the fourth embodiment has substantially the same structure as the heat pump system of the second embodiment in FIG 2. The first on-off valve 30 and the second on-off valve 32 in FIG 2 are replaced by the three-way valve 34.

Please note, in FIG 4 and the following figures the air stream circuit 12, the laundry drum 52 and the fan 54 are present, but not explicitly shown.

The three-way valve 34 is connected to the outlet of the condenser 16, the inlet of the by-pass line 28 and the inlet of the high pressure side 26 of the internal heat exchanger 22. The by-pass line 28 can include a one-way valve, which is not shown in FIG 4, in order to avoid that the refrigerant flows into the wrong direction.

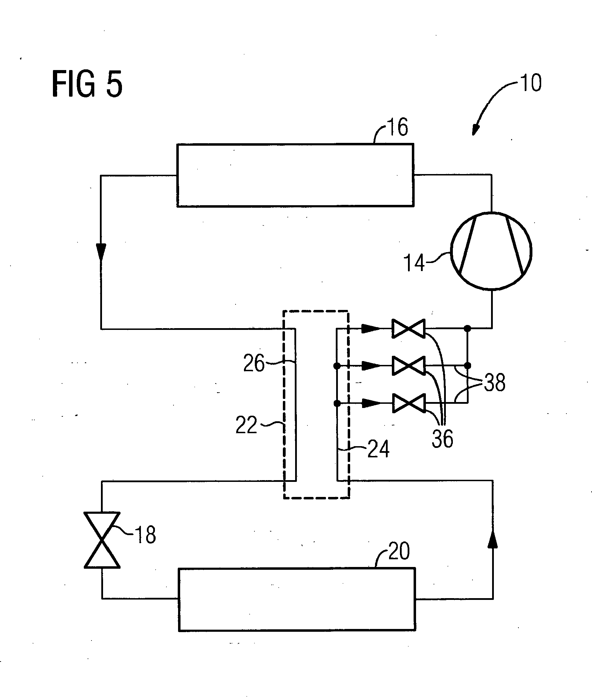

FIG 5 illustrates a schematic diagram of the heat pump laundry dryer according to a fifth embodiment of the present invention. The heat pump system of the fifth embodiment has substantially the same structure as the heat pump systems of the first and third embodiments.

Instead of the on-off valves 30 and 32 and the three-way valve 34, respectively, the heat pump system of the fifth embodiment comprises three or more on-off valves 36. Instead of the by-pass line 28 in FIG 1 and FIG 3, respectively, the heat pump system of the fifth embodiment comprises two by-pass lines 38.

The inlets of the both by-pass lines 38 are connected to different points of the low pressure side 24 of the internal heat exchanger 22. The outlets of the by-pass lines 38 are connected to the inlet of the compressor 14. The two by-pass lines 38 and the outlet of the low pressure side 24 include one of the three on-off valves 36 in each case. The length of the low pressure side 24 of the internal heat exchanger 22 is switchable and depends on the states of the three on-off valves 36. Thus, the dimension of the internal heat exchanger 22 is variable by switching the assembly of the on-off valves 36. The first by pass line can be provided upstream of the inlet of the low pressure side 24 of the internal heat exchanger 22 so that the low pressure side 24 can be completely by-passed.

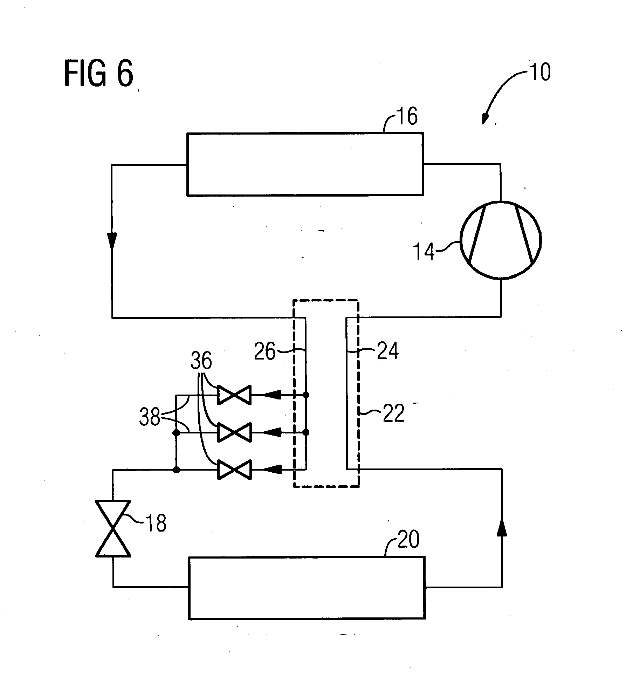

FIG 6 illustrates a schematic diagram of the heat pump laundry dryer according to a sixth embodiment of the present invention. In a similar way as in FIG 5, the heat pump system of the sixth embodiment is a modification of the second and fourth embodiments.

In the sixth embodiment the on-off valves 30 and 32 and the three-way valve 34, respectively, are replaced by the three on-off valves 36. Further, the by-pass line 28 in FIG 1 and FIG 3, respectively, is replaced by two by-pass lines 38.

The inlets of the both by-pass lines 38 are connected to different points of the high pressure side 26 of the internal heat exchanger 22. The outlets of the by-pass lines 38 are connected to the inlet of the throttle means 18. Each by-pass line 38 and the outlet of the high pressure side 26 include one of the three on-off valves 36. The length of the high pressure side 26 of the internal heat exchanger 22 is switchable and depends on the states of the three on-off valves 36. The dimension of the internal heat exchanger 22 is variable by switching the ensemble of the on-off valves 36. The first by-pass line can be provided upstream of the inlet of the high pressure side 26 of the internal heat exchanger 22 so that the high pressure side 26 can be completely by-passed.

The internal heat exchanger 22 is a passive device, so that it cannot be adapted to the actual thermodynamic conditions. However, the assembly of by-pass lines 38 and on-off valves 36 allows a variation of the length of the low pressure side 24 or the high pressure side 26, respectively, so that the heat exchange that takes place at the internal heat exchanger 22 can be adjusted during the operation of the laundry dryer.

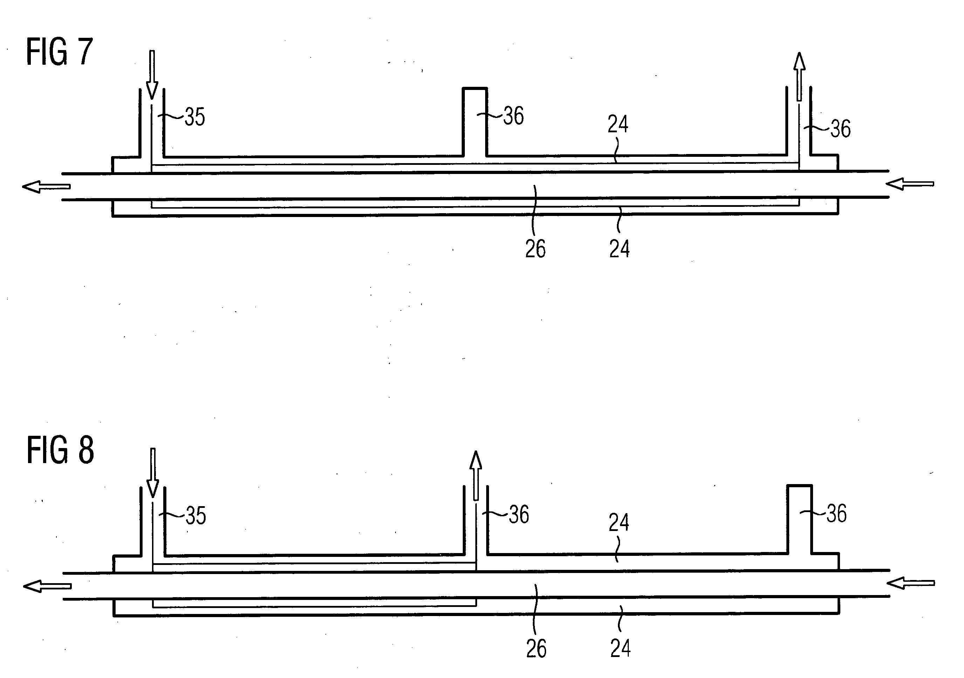

FIG 7 illustrates a schematic diagram of the internal heat exchanger 22 for the heat pump system according to the fifth embodiment of the present invention in a first state. The heat exchanger 22 includes an inner tube and an outer tube. The inner tube extends within the outer tube. The inner tube and the outer tube are parallel and concentric.

The outer tube forms the low pressure side 24 of the internal heat exchanger 22. The outer tube includes an inlet 35. Unlike in FIG 5 the outer tube comprises only two on-off valves 36. The inner tube forms the high pressure side 26 and comprises an inlet and an outlet.

In FIG 7 the central on-off valve 36 of the outer tube is closed, and the on-off valve 36 at the end of the outer tube is open, so that the complete length of the internal heat exchanger 22 is used.

FIG 8 illustrates a schematic diagram of the internal heat exchanger 22 for the heat pump system according to the fifth embodiment of the present invention in a second state. In said second state the central on-off valve 36 of the outer tube is open, and the on-off valve 36 at the end of the outer tube is closed. Thus, only about the half length of the internal heat exchanger 22 is used.

In the heat pump system according to the sixth embodiment the outer tube forms the high pressure side 26 of the internal heat exchanger 22, and the inner tube forms the low pressure side 24.

In an alternative embodiment, the tubes can be simply arranged so as to reciprocally contact each other without being one inside the other.

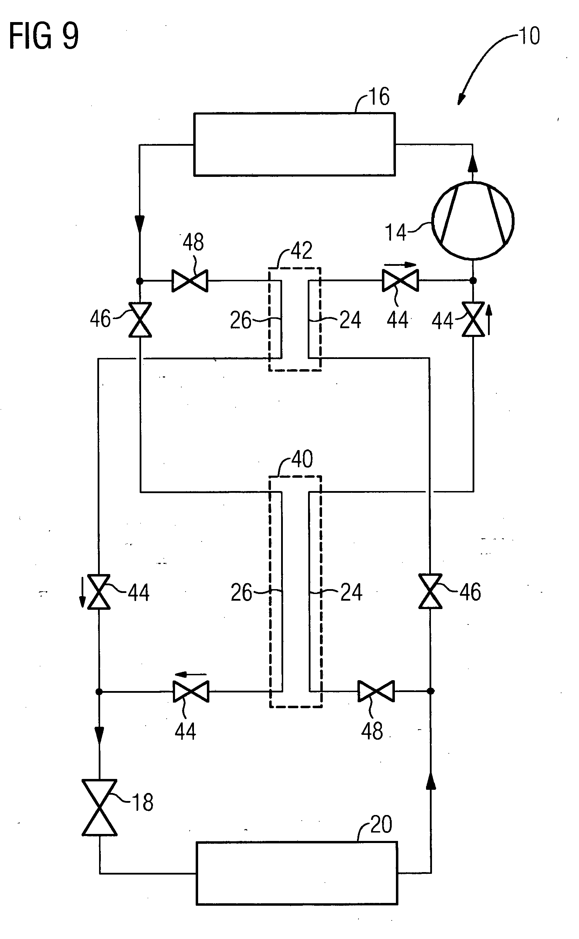

FIG 9 illustrates a schematic diagram of the heat pump laundry dryer according to a seventh embodiment of the present invention. The refrigerant circuit 10 includes the compressor 14, the condenser 16, the throttle means 18, the evaporator 20, and preferably, four one-way valves 44 and two pairs of on-off valves 46 and 48.

Instead of the internal heat exchanger 22 the refrigerant circuit 10 of the seventh embodiment includes a long internal heat exchanger 40 and a short internal heat exchanger 42. One of the on-off valves 48, the low pressure side 24 of the long internal heat exchanger 40 and one of the one-way valves 44 are arranged parallel to one of the on-off valves 46, the low pressure side 24 of the short internal heat exchanger 42 and one of the one-way valves 44. In a similar way, the other on-off valve 46, the high pressure side 26 of the long internal heat exchanger 40 and a further one-way valve 44 is arranged parallel to the other on-off valves 48, the high pressure side 26 of the short internal heat exchanger 42 and a further one-way valve 44. The long internal heat exchanger 40, the short internal heat exchanger 42 and the four on-off valves 46 and 48 are connected in such a way, that either the low pressure side 24 of the long internal heat exchanger 40 or the low pressure side 24 of the short internal heat exchanger 42 is interconnected between the outlet of the evaporator 20 and the inlet of the compressor 14. Further, either the high pressure sides 26 of the long internal heat exchanger 40 or the short internal heat exchanger 42 is interconnected between the outlet of the condenser 16 and the inlet of the throttle means 18.

The four one-way valves 44 can connected to the outlets of the low and high pressure sides 24 and 26, respectively, of the long and short internal heat exchangers 40 and 42, respectively, in each case, in order to avoid that the refrigerant flows into the wrong direction.

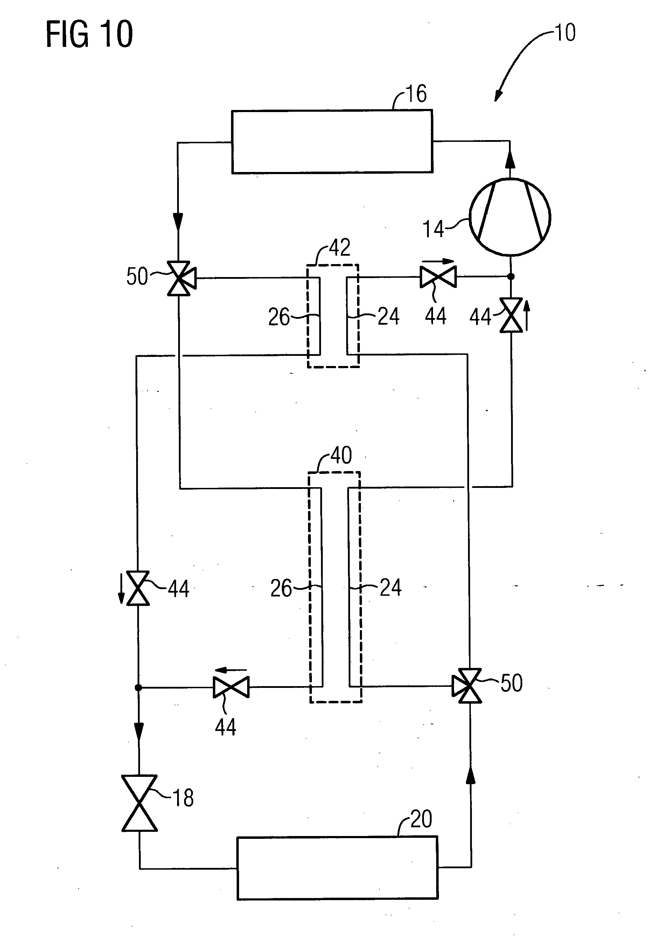

FIG 10 illustrates a schematic diagram of the heat pump laundry dryer according to an eighth embodiment of the present invention. In FIG 10 the two pairs of on-off valves 46 and 48 are replaced by two corresponding three-way valves 50.

There are four possible operation modes for the seventh and eighth embodiments shown in FIG 9 and FIG 10, respectively.

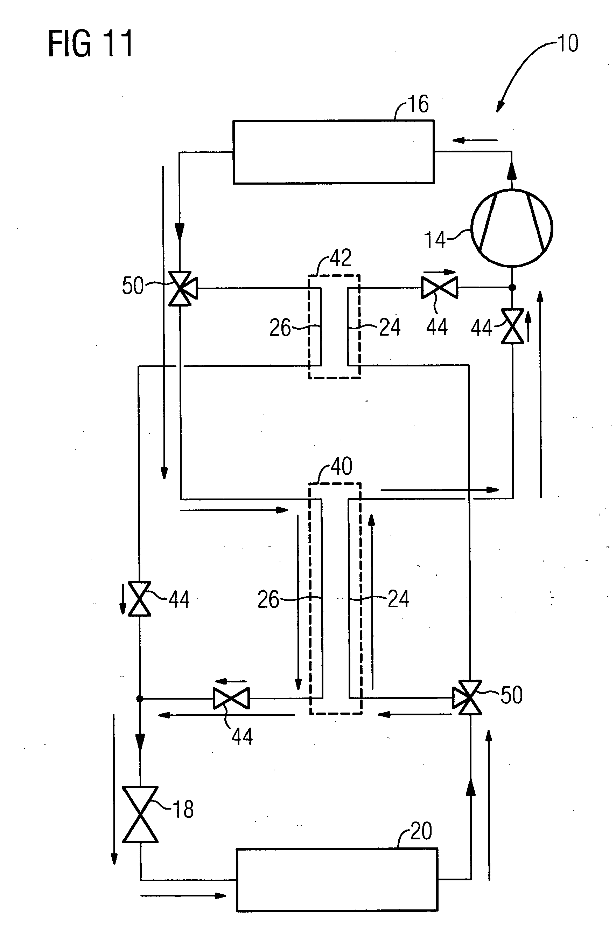

FIG 11 shows a schematic diagram of the heat pump system according to the eighth embodiment of the present invention in a first operation mode. The flow of the refrigerant is represented by arrows.

According to the first operation mode, the refrigerant flows through the compressor 14 and the condenser 16. Then the refrigerant by-passes the high pressure side 26 of the short internal heat exchanger 42 and flows through the high pressure side 26 of the long internal heat exchanger 40, the throttle means 18, the evaporator 20 and the low pressure side 24 of the long internal heat exchanger 40. At last the refrigerant by-passes the low pressure side 24 of the short internal heat exchanger 42 and flows back to the compressor 14 again.

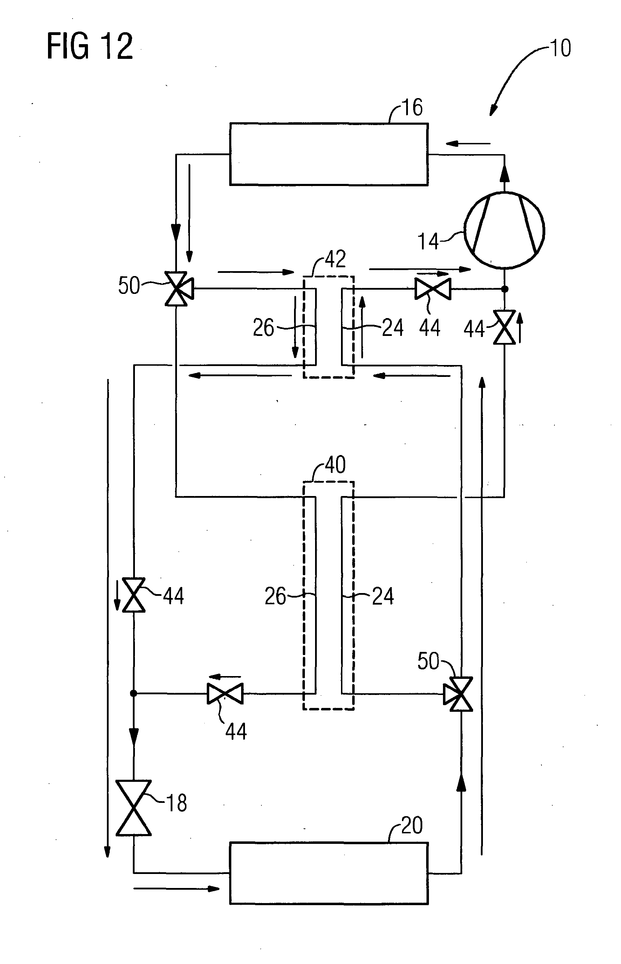

FIG 12 shows a schematic diagram of the heat pump system according to the eighth embodiment of the present invention in a second operation mode. The flow of the refrigerant is represented by arrows.

According to the second operation mode, the refrigerant flows through the compressor 14, the condenser 16 and the high pressure side 26 of the short internal heat exchanger 42. Then the refrigerant by-passes the high pressure side 26 of the long internal heat exchanger 40 and flows through the throttle means 18 and the evaporator 20. At last the refrigerant by-passes the low pressure side 24 of the long internal heat exchanger 40 and flows through the low pressure side 24 of the short internal heat exchanger 42 and back to the compressor 14 again.

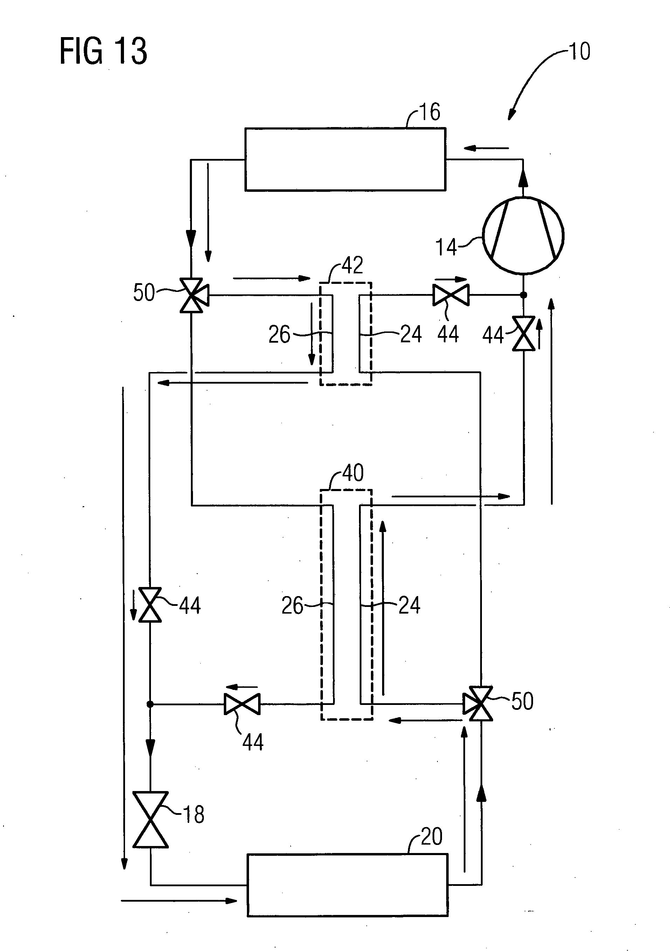

FIG 13 shows a schematic diagram of the heat pump system according to the eighth embodiment of the present invention in a third operation mode. The flow of the refrigerant is represented by arrows.

According to the third operation mode, the refrigerant flows through the compressor 14, the condenser 16 and the high pressure side 26 of the short internal heat exchanger 42. Then the refrigerant passes by-passes the high pressure side 26 of the long internal heat exchanger 40 and flows through the throttle means 18, the evaporator 20 and the low pressure side 24 of the long internal heat exchanger 40. At last the refrigerant by-passes the low pressure side 24 of the short internal heat exchanger 42 and flows back to the compressor 14 again.

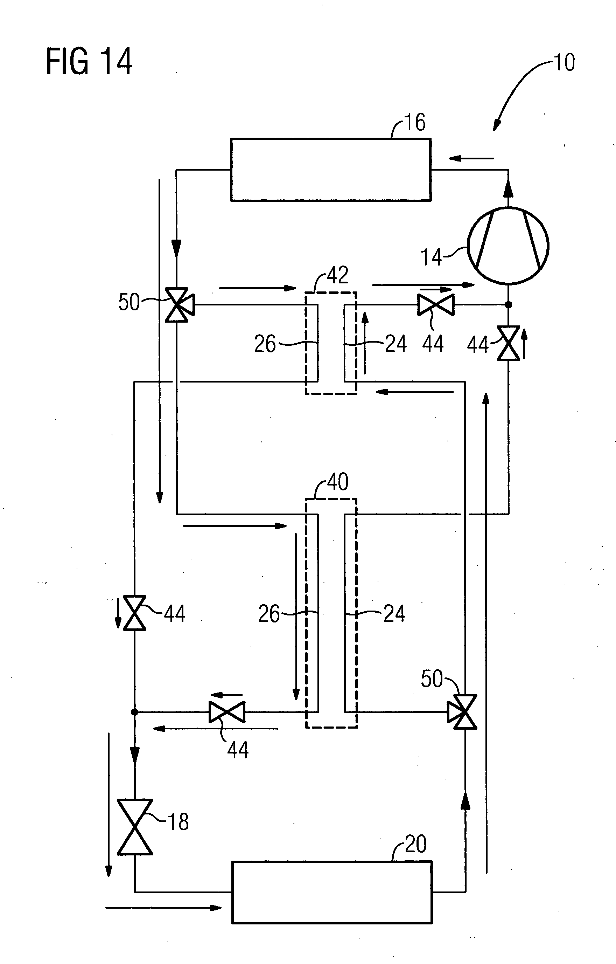

FIG 14 shows a schematic diagram of the heat pump system according to the eighth embodiment of the present invention in a fourth operation mode. The flow of the refrigerant is represented by arrows.

According to the fourth operation mode, the refrigerant flows through the compressor 14 and the condenser 16. Then the refrigerant by-passes the high pressure side 26 of the short internal heat exchanger 42 and flows through the high pressure side 26 of the long internal heat exchanger 40, the throttle means 18 and the evaporator 20. At last the refrigerant by-passes the low pressure side 24 of the long internal heat exchanger 40 and flows through the low pressure side 24 of the short internal heat exchanger 42 and back to the compressor 14 again.

In this way the heat pump system can work without using the internal heat exchanger, by using the long internal heat exchanger 40 or by using the short internal heat exchanger 42. The four operation modes are changeable during the drying cycle. A heat transfer occurs only then, if the refrigerant has to flow in both sides 24 and 26 of the internal heat exchangers 40 and 42, respectively.

For example, the short internal heat exchanger 42 can be used during the warm up phase, while the long short internal heat exchanger 40 is provided for the steady state phase.

Further, the heat pump system can work without the internal heat exchangers 40 and 42 being activated during the warm up phase, the long internal heat exchanger 40 can be activated during a first initial time interval of the steady state phase in order to increase the flooding conditions of the evaporator 20, and the short internal heat exchanger 42 can be activated during a second time interval of the steady state phase in order to reduce the flooding conditions of the evaporator 20, since less moisture is extracted from the laundry.

The on-off valves 30, 32, 36, 46 and 48 as well as the three-way valves 34 and 50 are controlled by an electronic controller. Preferably, temperature and/or pressure sensors are provided for monitoring the temperatures and/or pressures, respectively, of the heap pump system. The electronic controller actuates the valves 30, 32, 34, 36, 46, 48 and 50 in response to the received values. Predetermined threshold values may be stored in the electronic controller for this purpose.

Further, the temperature of the air in the air stream circuit 12 may be used as a parameter based on which the actuation of the valves can be decided. Preferably, the temperature of the refrigerant at the outlet of the condenser, the pressure of the refrigerant at the outlet of the compressor 14, the temperature of the refrigerant at the inlet of the compressor 14 and/or the temperature of the air stream at the outlet of the laundry chamber 52 are useful for the control of the valves 30, 32, 34, 36, 46 and/or 48.

In general, one or more sensors are provided for detecting the current value of at least one physical quantity associated to the refrigerant circuit 10 and/or the air stream circuit 12. A control unit of the tumble dryer is adapted to control the valves 30, 32, 34, 36, 46 and/or 48 in response to the time progression of said at least one physical quantity. Said control unit enables the refrigerant to flow through the by-pass line 28 or 38, respectively, or to prevent the refrigerant from flowing through said by-pass line 28 or 38, respectively, or to adjust the flow of the refrigerant through said by-pass line 28 or 38, respectively.

In particular, the one or more sensors and the control unit are provided for detecting a switching point between the warm-up phase and the steady state phase. Preferably, the temperature/pressure of the refrigerant at the outlet of the condenser 16, the temperature/pressure of the refrigerant at the inlet/outlet of the compressor 14, and/or the temperature of the air stream at the outlet of the laundry chamber 52 can be used to detect the switching point between the warm-up phase and the steady state phase

The valves 30, 32, 34, 36, 46 and 48 may be either totally open or totally closed. Further, it is possible to adjust the flow of the refrigerant, so that a part of the refrigerant flows through the by-pass line 28 or 38 and another part of the refrigerant flows through the "conventional" circuit. Thus, the refrigerant may partially by-pass the internal heat exchanger 22. In other words, the valves 30, 32, 34, 36, 46 and 48 may be partially open.

For the on-off valves 30, 32, 36, 46 and 48 shape memory materials can be used. The shape of such shape memory materials depend on the temperature, so that the on-off valves 30, 32, 36, 46 and 48 are opened and closed by the temperatures of the refrigerant. The shape memory material and its geometric structure have to be calibrated according to the temperature of the steady state phase.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as defined by the appended claims.

**List of reference numerals**
- 10: refrigerant circuit
- 12: air stream circuit
- 14: compressor
- 16: condenser, first heat exchanger
- 18: throttle means
- 20: evaporator, second heat exchanger
- 22: internal heat exchanger
- 24: low pressure side
- 26: high pressure side
- 28: by-pass line
- 30: on-off valve
- 32: on-off valve
- 34: three-way valve
- 35: inlet
- 36: on-off valve
- 38: by-pass line
- 40: long internal heat exchanger
- 42: short internal heat exchanger
- 44: one-way valve
- 46: on-off valve
- 48: on-off valve
- 50: three-way valve
- 52: laundry chamber
- 54: fan

## Claims

1. A laundry dryer with a heat pump system, said heat pump system comprises a closed refrigerant circuit (10) for a refrigerant and a drying air circuit (12) for drying air, wherein
- the refrigerant circuit (10) includes a compressor (14), a first heat exchanger (16), throttle means (18) and a second heat exchanger (20),
- the drying air circuit (12) includes the first heat exchanger (16), the second heat exchanger (20), a laundry chamber (52) and at least one fan (54),
- the refrigerant circuit (10) and the air stream circuit (12) are thermally coupled by first heat exchanger (16) and the second heat exchanger (20),
- the first heat exchanger (16) is provided for heating up the air stream and cooling down the refrigerant,
- the second heat exchanger (20) is provided for cooling down the air stream and heating up the refrigerant,
- the refrigerant circuit (10) comprises a low pressure side (24) between the outlet of the throttle means (18) and the inlet of the compressor (14),
- the refrigerant circuit (10) comprises a high pressure side (26) between the outlet of the compressor (14) and the inlet of the throttle means (18), and
- the low pressure side (24) and the high pressure side (26) are thermally coupled by at least one internal heat exchanger (22, 40, 42),
**characterized in, that**
the refrigerant circuit (10) includes at least one bypass line (28; 38) for bypassing at least a part of the low pressure side (24) and/or high pressure side (26) of the internal heat exchanger (22; 40, 42).

2. The laundry dryer according to claim 1,
**characterized in, that**
the by-pass line (28; 38) is at least partially closable by at least one regulation device (30, 32; 34; 36; 46, 48, 50).

3. The laundry dryer according to claims 1 or 2,
**characterized in, that**
the internal heat exchanger (22) has a variable length adjustable by a set of bypass lines (38) and regulation devices (30, 32; 34; 36; 46, 48, 50) associated to said bypass lines (38).

4. The laundry dryer according to claim 3,
**characterized in, that**
inlets of said by-pass lines (38) are connected to different points of the low pressure side (24) or the high pressure side (26) of the internal heat exchanger (22), outlets of said by-pass lines (38) are connected to the inlet of the compressor (14) or to the inlet of the throttle means (18).

5. The laundry dryer according to any one of the preceding claims,
**characterized in, that**
the heat pump system includes at least two internal heat exchangers (40, 42), wherein each low pressure side (24) and each high pressure side (26) of said internal heat exchangers (40, 42) are separately connectable to the refrigerant circuit (10).

6. The laundry dryer according to claim 5,
**characterized in, that**
the at least two internal heat exchangers (40, 42) have different sizes.

7. The laundry dryer according to claim 5 or 6,
**characterized in, that**
the low pressure side (24) of at least one internal heat exchanger (40, 42) is connected or connectable to the refrigerant circuit (10), and the low pressure side (24) of at least one other internal heat exchanger (40, 42) is disconnected or disconnectable from the refrigerant circuit (10).

8. The laundry dryer according to any one of the claims 5 to 7,
**characterized in, that**
the high pressure side (26) of at least one internal heat exchanger (40, 42) is connected or connectable to the refrigerant circuit (10), and the high pressure side (26) of at least one other internal heat exchanger (40, 42) is disconnected or disconnectable from the refrigerant circuit (10).

9. The laundry dryer according to any one of the preceding claims,
**characterized in, that**
one or more sensors are provided for detecting the current value of at least one physical quantity associated to the refrigerant circuit (10) and/or the drying air circuit (12) and wherein a control unit is adapted to control the at least one regulation device (30, 32, 34, 36, 46, 48, 50) in response to the time progression of said at least one physical quantity, the control unit enables the refrigerant to flow through the at least one by-pass line (28, 38), or to prevent the refrigerant from flowing through said by-pass line (28, 38), or to adjust the flow of the refrigerant through said bypass line (28, 38).

10. The laundry dryer according to claim 9,
**characterized in, that**
said at least one physical quantity is one of the following:
- temperature and/or pressure of the refrigerant at the outlet of the first heat exchanger (16),
- temperature and/or pressure of the refrigerant at the inlet and/or outlet of the compressor (14),
- temperature of the air stream at the outlet of the laundry chamber (52).

11. The laundry dryer according to any one of the preceding claims,
**characterized in, that**
at least one regulation device is an on-off valve (30, 32; 36; 46, 48) or a three-way valve (34; 50).

12. The laundry dryer according to any one of the preceding claims,
**characterized in, that**
at least one regulation device (30, 32; 34; 36; 46, 48, 50) is controlled by an electronic controller.

13. The laundry dryer according to any one of the preceding claims,
**characterized in, that**
at least one regulation device (30, 32; 34; 36; 46, 48, 50) includes a shape memory material, wherein the geometric structure of shape memory material depends on the temperature of the refrigerant.

14. The laundry dryer according to any one of the preceding claims,
**characterized in, that**
at least one regulation device (30, 32; 34; 36; 46, 48, 50) is a mechanical valve driven by the pressure of the refrigerant.

15. The laundry dryer according to any one of the preceding claims,
**characterized in, that**
only one of the low pressure side (24) or high pressure side (26) of the internal heat exchanger (22; 40, 42) is bypassed by at least one by-pass line (28; 38).

## Patentansprüche

1. Wäschetrockner mit einem Wärmepumpensystem, wobei das Wärmepumpensystem einen geschlossenen Kühlmittelkreislauf (10) für ein Kühlmittel und einen Trockenluftkreislauf (12) für Trockenluft umfasst, wobei:
- der Kühlmittelkreislauf (10) einen Kompressor (14), einen ersten Wärmetauscher (16), Drosselmittel (18) und einen zweiten Wärmetauscher (20) aufweist,
- der Trockenluftkreislauf (12) den ersten Wärmetauscher (16), den zweiten Wärmetauscher (20), eine Wäschekammer (52) und mindestens einen Ventilator (54) aufweist,
- der Kühlmittelkreislauf (10) und der Luftstromkreislauf (12) durch den ersten Wärmetauscher (16) und den zweiten Wärmetauscher (20) thermisch gekoppelt sind,
- der erste Wärmetauscher (16) für das Erwärmen des Luftstroms und das Abkühlen des Kühlmittels vorgesehen ist,
- der zweite Wärmetauscher (20) für das Abkühlen des Luftstroms und das Erwärmen des Kühlmittels vorgesehen ist,
- der Kühlmittelkreislauf (10) eine Niederdruckseite (24) zwischen dem Auslass der Drosselmittel (18) und dem Einlass des Kompressors (14) umfasst,
- der Kühlmittelkreislauf (10) eine Hochdruckseite (26) zwischen dem Auslass des Kompressors (14) und dem Einlass der Drosselmittel (18) umfasst, und
- die Niederdruckseite (24) und die Hochdruckseite (26) durch mindestens einen internen Wärmetauscher (22, 40, 42) thermisch gekoppelt sind,
**dadurch gekennzeichnet, dass**
der Kühlmittelkreislauf (10) mindestens eine Umlaufleitung (28; 38) für das Umlaufen von zumindest einem Teil der Niederdruckseite (24) und/oder der Hochdruckseite (26) des internen Wärmetauschers (22; 40, 42) aufweist.

2. Wäschetrockner nach Anspruch 1,
**dadurch gekennzeichnet, dass**
die Umlaufleitung (28; 38) zumindest teilweise durch mindestens eine Regelvorrichtung (30, 32; 34; 36; 46, 48, 50) verschließbar ist.

3. Wäschetrockner nach Anspruch 1 oder 2,
**dadurch gekennzeichnet, dass**
der interne Wärmetauscher (22) eine variable Länge hat, die durch einen Satz Umlaufleitungen (38) und Regelvorrichtungen (30, 32; 34; 36; 46, 48, 50) einstellbar ist, die zu den Umlaufleitungen (38) gehören.

4. Wäschetrockner nach Anspruch 3,
**dadurch gekennzeichnet, dass**
Einlässe der Umlaufleitungen (38) mit unterschiedlichen Punkten der Niederdruckseite (24) oder der Hochdruckseite (26) des internen Wärmetauschers (22) verbunden sind und Auslässe der Umlaufleitungen (38) mit dem Einlass des Kompressors (14) oder dem Einlass der Drosselmittel (18) verbunden sind.

5. Wäschetrockner nach einem der vorhergehenden Ansprüche,
**dadurch gekennzeichnet, dass**
das Wärmepumpensystem mindestens zwei interne Wärmetauscher (40, 42) aufweist, wobei jede Niederdruckseite (24) und jede Hochdruckseite (26) der internen Wärmetauscher (40, 42) separat mit dem Kühlmittelkreislauf (10) verbindbar sind.

6. Wäschetrockner nach Anspruch 5,
**dadurch gekennzeichnet, dass**
die mindestens zwei internen Wärmetauscher (40, 42) unterschiedliche Größen haben.

7. Wäschetrockner nach Anspruch 5 oder 6,
**dadurch gekennzeichnet, dass**
die Niederdruckseite (24) mindestens eines internen Wärmetauschers (40, 42) mit dem Kühlmittelkreislauf (10) verbunden oder verbindbar ist und die Niederdruckseite (24) mindestens eines anderen internen Wärmetauschers (40, 42) vom Kühlmittelkreislauf (10) getrennt oder trennbar ist.

8. Wäschetrockner nach einem der Ansprüche 5 bis 7,
**dadurch gekennzeichnet, dass**
die Hochdruckseite (26) mindestens eines internen Wärmetauschers (40, 42) mit dem Kühlmittelkreislauf (10) verbunden oder verbindbar ist und die Hochdruckseite (26) mindestens eines anderen internen Wärmetauschers (40, 42) vom Kühlmittelkreislauf (10) getrennt oder trennbar ist.

9. Wäschetrockner nach einem der vorhergehenden Ansprüche,
**dadurch gekennzeichnet, dass**
ein oder mehrere Sensoren vorgesehen sind, um den aktuellen Wert mindestens einer physikalischen Quantität zu erfassen, die zum Kühlmittelkreislauf (10) und/oder zum Trockenluftkreislauf (12) gehört, und wobei eine Steuereinheit ausgelegt ist, die mindestens eine Regelvorrichtung (30, 32, 34, 36, 46, 48, 50) als Reaktion auf den Zeitfortschritt der mindestens einen physikalischen Quantität zu steuern, wobei die Steuereinheit es dem Kühlmittel ermöglicht, durch die mindestens eine Umlaufleitung (28, 38) zu fließen, oder das Kühlmittel am Fließen durch die Umlaufleitung (28, 38) hindert, oder den Fluss des Kühlmittels durch die Umlaufleitung (28, 38) einstellt.

10. Wäschetrockner nach Anspruch 9,
**dadurch gekennzeichnet, dass**
die mindestens eine physikalische Quantität eine der folgenden ist:
- Temperatur und/oder Druck des Kühlmittels am Auslass des ersten Wärmetauschers (16),
- Temperatur und/oder Druck des Kühlmittels am Einlass und/oder Auslass des Kompressors (14),
- Temperatur des Luftstroms am Auslass der Wäschekammer (52).

11. Wäschetrockner nach einem der vorhergehenden Ansprüche,
**dadurch gekennzeichnet, dass**
mindestens eine Regelvorrichtung ein Ein/Aus-Ventil (30, 32; 36; 46, 48) oder ein Drei-Wege-Ventil (34; 50) ist.

12. Wäschetrockner nach einem der vorhergehenden Ansprüche,
**dadurch gekennzeichnet, dass**
mindestens eine Regelvorrichtung (30, 32; 34; 36; 46, 48, 50) durch eine elektronische Steuerung gesteuert ist.

13. Wäschetrockner nach einem der vorhergehenden Ansprüche,
**dadurch gekennzeichnet, dass**
mindestens eine Regelvorrichtung (30, 32; 34; 36; 46, 48, 50) ein Formgedächtnismaterial aufweist, wobei die geometrische Struktur des Formgedächtnismaterials von der Temperatur des Kühlmittels abhängt.

14. Wäschetrockner nach einem der vorhergehenden Ansprüche,
**dadurch gekennzeichnet, dass**
mindestens eine Regelvorrichtung (30, 32; 34; 36; 46, 48, 50) ein durch den Druck des Kühlmittels angetriebenes mechanisches Ventil ist.

15. Wäschetrockner nach einem der vorhergehenden Ansprüche,
**dadurch gekennzeichnet, dass**
nur eine, die Niederdruckseite (24) oder die Hochdruckseite (26) des internen Wärmetauschers (22; 40, 42), durch mindestens eine Umlaufleitung (28; 38) umlaufen wird.

## Revendications

1. Sèche-linge avec un système de pompe à chaleur, ledit système de pompe à chaleur comprenant un circuit de réfrigérant fermé (10) pour un réfrigérant et un circuit d'air de séchage (12) pour de l'air de séchage, dans lequel
- le circuit de réfrigérant (10) comprend un compresseur (14), un premier échangeur de chaleur (16), un moyen d'étranglement (18) et un deuxième échangeur de chaleur (20),
- le circuit d'air de séchage (12) comprend le premier échangeur de chaleur (16), le deuxième échangeur de chaleur (20), une chambre à linge (52) et au moins un ventilateur (54),
- le circuit de réfrigérant (10) et le circuit d'air de séchage (12) sont accouplés thermiquement par le premier échangeur de chaleur (16) et le deuxième échangeur de chaleur (20),
- le premier échangeur de chaleur (16) est destiné à chauffer le flux d'air et à refroidir le réfrigérant,
- le deuxième échangeur de chaleur (20) est destiné à refroidir le flux d'air et à chauffer le réfrigérant,
- le circuit de réfrigérant (10) comprend un côté basse pression (24) entre la sortie du moyen d'étranglement (18) et l'entrée du compresseur (14),
- le circuit de réfrigérant (10) comprend un côté haute pression (26) entre la sortie du compresseur (14) et l'entrée du moyen d'étranglement (18), et
- le côté basse pression (24) et le côté haute pression (26) sont accouplés thermiquement par au moins un échangeur de chaleur externe (22, 40, 42),
**caractérisé en ce que**
le circuit de réfrigérant (10) comprend au moins une conduite de dérivation (28 ; 38) permettant de contourner au moins une partie du côté basse pression (24) et/ou du côté haute pression (26) de l'échangeur de chaleur externe (22, 40, 42).

2. Sèche-linge selon la revendication 1,
**caractérisé en ce que**
la conduite de dérivation (28 ; 38) peut être au moins partiellement fermée par au moins un dispositif de régulation (30, 32 ; 34 ; 36 ; 46, 48, 50).

3. Sèche-linge selon la revendication 1 ou 2,
**caractérisé en ce que**
l'échangeur de chaleur externe (22) présente une longueur variable, réglable par le biais d'un ensemble de conduites de dérivation (38) et de dispositifs de régulation (30, 32 ; 34 ; 36 ; 46, 48, 50) associés auxdites conduites de dérivation (38).

4. Sèche-linge selon la revendication 3,
**caractérisé en ce que**
des entrées desdites conduites de dérivation (38) sont connectées à différents points du côté basse pression (24) ou du côté haute pression (26) de l'échangeur de chaleur externe (22), des sorties desdites conduites de dérivation (38) sont connectées à l'entrée du compresseur (14) ou à l'entrée du moyen d'étranglement (18).

5. Sèche-linge selon l'une quelconque des revendications précédentes,
**caractérisé en ce que**
le système de pompe à chaleur comprend au moins deux échangeurs de chaleur internes (40, 42), chaque côté basse pression (24) et chaque côté haute pression (26) desdits échangeurs de chaleur internes (40, 42) peuvent être connectés séparément au circuit de réfrigérant (10).

6. Sèche-linge selon la revendication 5,
**caractérisé en ce que**
les au moins deux échangeurs de chaleur internes (40, 42) présentent des tailles différentes.

7. Sèche-linge selon la revendication 5 ou 6,
**caractérisé en ce que**
le côté basse pression (24) d'au moins un échangeur de chaleur interne (40, 42) est connecté ou peut être connecté au circuit de réfrigérant (10), et le côté basse pression (24) d'au moins un autre échangeur de chaleur interne (40, 42) est déconnecté ou peut être déconnecté du circuit de réfrigérant (10).

8. Sèche-linge selon l'une quelconque des revendications 5 à 7,
**caractérisé en ce que**
le côté haute pression (26) d'au moins un échangeur de chaleur interne (40, 42) est connecté ou peut être connecté au circuit de réfrigérant (10), et le côté haute pression (26) d'au moins un autre échangeur de chaleur interne (40, 42) est déconnecté ou peut être déconnecté du circuit de réfrigérant (10).

9. Sèche-linge selon l'une quelconque des revendications précédentes,
**caractérisé en ce que**
il est prévu un ou plusieurs capteurs destinés à détecter la valeur actuelle d'au moins une quantité physique associée au circuit de réfrigérant (10) et/ou au circuit d'air de séchage (12), et dans lequel une unité de commande est adaptée pour commander l'au moins un dispositif de régulation (30, 32 ; 34 ; 36 ; 46, 48, 50) en réponse à la progression dans le temps de ladite au moins une quantité physique, l'unité de commande permettant au réfrigérant de s'écouler à travers l'au moins une conduite de dérivation (28, 38), ou d'empêcher le réfrigérant de s'écouler à travers ladite conduite de dérivation (28, 38), ou de régler le flux du réfrigérant à travers ladite conduite de dérivation (28, 38).

10. Sèche-linge selon la revendication 9,
**caractérisé en ce que**
ladite au moins une quantité physique est l'une parmi les suivantes :
- température et/ou pression du réfrigérant à la sortie du premier échangeur de chaleur (16),
- température et/ou pression du réfrigérant à l'entrée et/ou à la sortie du compresseur (14),
- température du flux d'air à la sortie de la chambre à linge (52).

11. Sèche-linge selon l'une quelconque des revendications précédentes,
**caractérisé en ce que**
au moins un dispositif de régulation est une soupape marche/arrêt (30, 32 ; 36 ; 46, 48) ou une soupape à trois voies (34 ; 50).

12. Sèche-linge selon l'une quelconque des revendications précédentes,
**caractérisé en ce que**
au moins un dispositif de régulation (30, 32 ; 34 ; 36 ; 46, 48, 50) est commandé par une commande électronique.

13. Sèche-linge selon l'une quelconque des revendications précédentes,
**caractérisé en ce que**
au moins un dispositif de régulation (30, 32 ; 34 ; 36 ; 46, 48, 50) comprend un matériau à mémoire de forme, la structure géométrique du matériau à mémoire de forme dépendant de la température du réfrigérant.

14. Sèche-linge selon l'une quelconque des revendications précédentes,
**caractérisé en ce que**
au moins un dispositif de régulation (30, 32 ; 34 ; 36 ; 46, 48, 50) est une soupape mécanique entraînée par la pression du réfrigérant.

15. Sèche-linge selon l'une quelconque des revendications précédentes,
**caractérisé en ce que**
seulement l'un parmi le côté basse pression (24) et le côté haute pression (26) de l'échangeur de chaleur externe (22 ; 40, 42) est contourné par au moins une conduite de dérivation (28 ; 38).
